# EUROPEAN PATENT APPLICATION

(11) **EP 4 664 332 A1**
(43) Date of publication of application: **17.12.2025**
(21) Application number: 23923715.9
(22) Date of filing: 18.10.2023
(51) Int. Cl.: G06F 21/56, G06F 13/38, G06F 13/42, G06F 3/06, G06F 21/78

(54) **DATA PROCESSING METHOD, PROCESSOR, STORAGE DEVICE, INTERFACE CARD, AND STORAGE MEDIUM**

(30) Priority: 22.02.2023 CN 202310188646
(71) Applicant: Huawei Technologies Co., Ltd., Shenzhen, Guangdong 518129 (CN)
(72) Inventor: CHEN, Keyun, Shenzhen, Guangdong 518129 (CN); DONG, Hao, Shenzhen, Guangdong 518129 (CN); XUE, Qiang, Shenzhen, Guangdong 518129 (CN)
(74) Representative: Gill Jennings & Every LLP
(86) International application number: PCT/CN2023/125203
(87) International publication number: WO 2024/174550

(57) **Abstract**

A data processing method, a processor, a storage device, an interface card, and a storage medium are disclosed, and pertain to the field of computer technologies. The method is performed by a processor in the storage device. The storage device is configured to provide a storage service for a host. The storage device communicates with a detection device. The method includes: receiving an infection detection request sent by the detection device; obtaining, based on the infection detection request, a data feature obtained by performing feature extraction on target data; and outputting, to the detection device, the data feature for detecting whether the target data is infected by a virus. In this application, when infection detection is performed on data in the storage device, there is no need to read a large amount of data and send the data to the detection device, and the storage device directly provides a data feature of the data. In this way, network congestion between the storage device and the detection device caused by virus detection is effectively reduced, and a speed of performing infection detection on the data in the storage device is improved.

## Description

This application claims priority to Chinese Patent Application No. 202310188646.6, filed on February 22, 2023 and entitled "DATA PROCESSING METHOD, PROCESSOR, STORAGE DEVICE, INTERFACE CARD, AND STORAGE MEDIUM", which is incorporated herein by reference in its entirety.

### TECHNICAL FIELD

This application relates to the field of computer technologies, and in particular, to a data processing method, a processor, a storage device, an interface card, and a storage medium.

### BACKGROUND

A ransomware virus is a computer virus that threatens data security, and reads and writes data in a storage device in a form of ransomware to tamper with the data, seriously threatening data security. Therefore, the key to ensure data security is to detect in time whether data is infected by a ransomware virus.

Currently, ransomware virus detection software (also referred to as anti-ransomware) is usually used to perform infection detection (also referred to as ransomware detection) on data in the storage device. During the detection, the anti-ransomware runs on a dedicated detection device, the detection device reads the data from the storage device through a network file system (NFS) interface, and the anti-ransomware analyzes the data to determine whether the data is infected by a ransomware virus.

However, currently, when the anti-ransomware performs infection detection, all detected data needs to be read from the storage device to the detection device. When a large amount of data needs to be detected, network congestion between the storage device and the detection device is caused, affecting a speed of infection detection.

### SUMMARY

This application provides a data processing method, a processor, a storage device, an interface card, and a storage medium, to reduce network congestion between the storage device and a detection device caused by virus detection. Technical solutions are as follows.

According to a first aspect, a data processing method is provided. The method is performed by a processor in a storage device. The storage device is configured to provide a storage service for a host. The storage device communicates with a detection device. The method includes:
receiving an infection detection request from the detection device, and obtaining a data feature of target data based on the infection detection request, where the infection detection request is for detecting whether the target data is infected by a virus, and the data feature is obtained by performing feature extraction on the target data; and
outputting the data feature of the target data to the detection device, where the data feature is used by the detection device to detect whether the data is infected by a virus.

In this application, when infection detection is performed on data in the storage device, there is no need to read a large amount of data and send the data to the detection device, and the storage device directly provides a data feature of the data. In this way, communication load caused by data transmission is effectively reduced, network congestion between the storage device and the detection device caused by virus detection is effectively reduced, and a speed of performing infection detection on the data in the storage device is improved. In addition, because frequent exposure of the data to the outside of the storage device is avoided, security of the data in the storage device is further improved.

In a possible implementation, the processor further performs, in a process of running a task related to storage of the target data, feature extraction on the target data to obtain the data feature. This process is also referred to as in-line calculation on the data feature. In-line calculation means performing additional data feature calculation without changing an original service running mode, and this prevents data from being repeatedly transferred between different locations. In this way, a communication delay is reduced, calculation efficiency is improved, and overall energy consumption is reduced.

In a possible implementation, that the processor further performs, in the process of running the task related to storage of the target data, feature extraction on the target data to obtain the data feature includes:

When the processor is a storage device CPU, in a process in which the storage device CPU stores the target data, the storage device CPU performs calculation on the target data to generate the data feature, where the storage device CPU is connected to a storage interface card.

Alternatively, when the processor is a processing unit of an storage interface card, and the storage interface card communicates with the host, in a process in which the storage interface card receives the target data sent by the host, the processing unit of the storage interface card performs calculation on the target data to generate the data feature.

The storage interface card is used as a communication interface in the storage device, and an original function of the storage interface card relates to target data processing, for example, parsing a data packet, and mapping and converting a data storage address. In view of this, the storage interface card processor is used to perform in-line calculation on the data feature. In this way, computing power of the interface card and a network interface position of the interface card in a transmission link can be efficiently used, to reduce a communication delay, improve calculation efficiency, and reduce overall energy consumption.

According to the foregoing technical solution, calculation and storage load caused by data reading, data feature calculation, data feature storage, and other processes may be offloaded from the detection device that performs infection detection to the storage device CPU and the storage interface card processor in a data transmission link.

In a possible implementation, before obtaining the data feature of the target data, the method further includes:
receiving the data feature from the host; and sending the data feature to a storage medium of the storage device for persistent storage.

In this application, the host can perform a data feature extraction process, to offload calculation and storage load caused by processes such as data reading, data feature calculation, and data feature storage from the detection device that performs infection detection to the host.

In a possible implementation, before receiving the data feature from the host, a process in which the host determines the data feature includes: In a process in which a host CPU generates the target data, the host CPU performs calculation on the target data to generate the data feature.

Alternatively, in a process in which an interface card of the host sends the target data to the storage device, a processing unit of the interface card of the host performs calculation on the target data to generate the data feature.

The interface card of the host is used as a communication interface on a host side, and an original function of the interface card of the host relates to target data processing, for example, encapsulating a data packet, and mapping and converting a data storage address. In view of this, a host interface card processor is used to perform in-line calculation on the data feature. In this way, computing power of the interface card and a network interface position of the interface card in a transmission link can be efficiently used, to reduce a communication delay, improve calculation efficiency, and reduce overall energy consumption.

In a possible implementation, the method further includes:
in response to a write request from the host, before the target data is written into a target storage space of the storage device, performing feature extraction on the target data to obtain the data feature, where the write request carries the target data, and the target storage space is a persistent storage space provided by the storage device; and
storing the data feature as metadata of the data in the target storage space.

Obtaining the data feature of the target data based on the infection detection request specifically includes:
obtaining the data feature from the metadata based on the infection detection request.

In some embodiments, the storage device has extracted and stored the data feature of the data in a form of metadata, to directly output the stored data feature to the detection node when the infection detection request is received, so as to effectively improve infection detection efficiency.

In a possible implementation, a storage space of the storage device is divided into a metadata storage space dedicated for metadata storage and a storage space not dedicated for metadata storage. Storing the data feature as the metadata of the data in the target storage space includes:
in the metadata storage space that is in the storage device and that is dedicated for metadata storage, storing the data feature as the metadata of the data in the target storage space.

A manner of respectively storing the metadata and the data in different storage spaces can facilitate management of the metadata.

In a possible implementation, obtaining the data feature of the target data based on the infection detection request includes:
performing, based on the infection detection request, feature extraction on the target data stored in a target storage space indicated by the infection detection request, to obtain the data feature.

The foregoing provides a technical solution for extracting the data feature in real time. The data feature is not calculated when the data is written, but the data feature is calculated by reading the data when the infection detection request is received. In this way, data transmission load can be effectively reduced, storage pressure of the storage device can be effectively reduced, and performance of the storage device is improved.

In a possible implementation, performing feature extraction on the data stored in the target storage space to obtain the data feature includes:
performing feature extraction on data in at least one unit sampling interval of the target storage space in a sampling manner for the target storage space, to obtain an interval data feature of the at least one unit sampling interval; and
generating the data feature of the data in the target storage space based on the at least one interval data feature.

In the foregoing technical solution, data is sampled by using an interval, so that a data feature can be more representative for the entire data, to improve accuracy of subsequent infection detection based on the data feature.

In a possible implementation, generating the data feature of the data in the target storage space based on the at least one interval data feature includes:
determining a set including the at least one interval data feature as the data feature of the data in the target storage space.

According to the foregoing manner, the data feature of the data can be determined by using a data sampling interval as a granularity, so that reliable data support can be provided for infection detection, to improve a speed and accuracy of infection detection.

In a possible implementation, generating the data feature of the data in the target storage space based on the at least one interval data feature includes:
determining a distribution feature of the at least one unit sampling interval based on a quantity of unit sampling intervals corresponding to a type of the at least one interval data feature, and determining the distribution feature as the data feature of the data in the target storage space, where the distribution feature indicates a quantity distribution status of unit sampling intervals of the target storage space for different types.

According to the foregoing manner, the data feature of the data may be determined from a perspective of statistical distribution, so that a data segment in which an anomaly occurs in the data feature can be quickly detected, to improve a speed and accuracy of infection detection.

In a possible implementation, the method further includes: in response to a feature policy configuration instruction, obtaining feature policy information for the storage device, where the feature policy information indicates a manner of performing feature extraction on the data in the storage device.

In a possible implementation, the data feature is specifically an information entropy of the target data or a digest of the target data, the information entropy indicates uncertainty of the data, and the digest is a segment extracted from the data and is for identifying the data.

The foregoing technical solution provides a flexible and configurable data feature extraction mechanism, so that feature extraction can be performed in a plurality of sampling manners, and a plurality of different feature extraction algorithms can be flexibly switched for a plurality of types of data features, to improve data processing efficiency and improve effects of performing infection detection by using data features in different dimensions.

In a possible implementation, before the storage device receives the infection detection request for the storage device from the detection device, the detection device sends the infection detection request for the storage device.

After the storage device outputs the data feature of the data to the detection device, the detection device detects, based on the data feature, whether the data is infected by a virus.

In a possible implementation, the data feature is an information entropy, and the information entropy indicates uncertainty of the data. That the detection device detects, based on the data feature, whether the data is infected by a virus includes:
if the information entropy exceeds a target information entropy interval, determining that the data is infected by a virus, where the target information entropy interval indicates a range of an information entropy of uninfected data.

In a possible implementation, the data feature is a digest, and the digest is a segment extracted from the data and is for identifying the data. That the detection device detects, based on the data feature, whether the data is infected by a virus includes:
if the obtained digest of the data is inconsistent with a check digest, determining that the data is infected by a virus, where the check digest is a digest obtained when the data stored in the detection device is not infected.

According to the foregoing technical solution, the detection device directly performs detection based on the data feature obtained from the storage device, to reduce time consumed by disk reading and data transmission, and improve a speed of performing infection detection on the data in the storage device.

In a possible implementation, the processor is a storage device CPU, and the storage device CPU communicates with a memory of the storage device and the storage interface card.

In a possible implementation, the processor is a processing unit of the storage interface card, the storage interface card is managed by the storage device CPU, and the storage interface card further communicates with the host through a network.

According to the foregoing technical solution, the calculation and storage load caused by data reading, data feature calculation, data feature storage, and other processes may be offloaded from the detection device that performs infection detection to the storage device CPU and the storage interface card processor in the data transmission link.

According to a second aspect, a data processing method is provided. The method is performed by a processor in a storage device. The method includes:
receiving an infection detection request for target data; and
if user-defined metadata of the target data does not meet a target value or is not within a target value range, outputting a first detection result, where the first detection result indicates that the data is tampered with; or
if the user-defined metadata of the target data meets the target value or is within the target value range, outputting a second detection result, where the second detection result indicates that the data is not tampered with, and the user-defined metadata is included when the target data is written into the storage device.

The foregoing method is a user-defined virus detection method provided by a storage system, and supports a user in defining the user-defined metadata used for virus detection in the storage system (or the storage device) and a detection rule for the user-defined metadata. In this application, in response to the infection detection request, the processor of the storage device outputs a detection result based on the user-defined metadata and the detection rule of data. The user-defined metadata is for virus infection detection in the storage device. For example, the user-defined metadata may be a reliability identifier (for example, an integrity tag of NFSv4) provided by a front-end protocol, a key, a specific character string, or attribute data of a user-defined type. The user-defined metadata may alternatively be associated with a service system, for example, a reliability identifier carried in data written by normal service software into the storage device or a service identifier ID associated with service software or the service system. The user-defined metadata may alternatively be a meaningless character (for example, a magic number) that does not affect a data function. This is not limited thereto in this application.

According to the foregoing technical solution, metadata may be defined by the user by using information such as a storage protocol or a service identifier, and the user-defined detection rule is used to efficiently determine whether the data is infected by a ransomware virus, to improve efficiency and a speed of infection detection.

According to a third aspect, an embodiment of this application provides a processor, including: a power supply circuit, configured to supply power to a processing circuit; and the processing circuit, connected to the power supply circuit and configured to perform the data processing method in any one of the first aspect or the optional implementations of the first aspect.

According to a fourth aspect, an embodiment of this application provides a storage device, including an interface card and the processor according to the first aspect. The processor is the storage device CPU according to the first aspect. The interface card is configured to communicate with a host. The storage device is configured to provide a storage service for the host. The processor is configured to perform the data processing method in any one of the optional implementations of the first aspect or the second aspect.

A network interface card may be an intelligent network interface card DPU. The network interface card can offload data processing functions in a network, a storage, and an operating system to hardware for execution, to improve a data processing capability of the storage device and release CPU computing power. Therefore, the network interface card bears processing works of the storage device, to reduce calculation load of the storage device, and improve data processing efficiency.

According to a fifth aspect, an embodiment of this application provides an interface card, including an interface and the processor according to the first aspect.

The interface is configured to install the interface card in a storage device, and communicate with a central processing unit of the storage device after the interface card is installed in the storage device.

The processor performs the data processing method in any one of the optional implementations of the first aspect or the second aspect after the interface card is installed in the storage device.

In a possible implementation, the processor in the interface card is a data processing unit DPU.

According to a sixth aspect, an embodiment of this application provides a computer-readable storage medium. The computer-readable storage medium is configured to store at least one segment of program code. The at least one segment of program code is executed by a processor, to implement the data processing method in any one of the optional implementations of the first aspect or the second aspect. The storage medium includes but is not limited to a volatile memory, for example, a random access memory, or a non-volatile memory, for example, a flash memory, a hard disk drive (hard disk drive, HDD), or a solid-state drive (solid-state drive, SSD).

According to a seventh aspect, an embodiment of this application provides a computer program product. When the computer program product runs on a computer, the computer is enabled to implement the data processing method in any one of the optional implementations of the first aspect or the second aspect. The computer program product may be a software installation package. When the foregoing data processing method needs to be implemented, the computer program product may be downloaded, and the computer program product may be executed on the computer.

### BRIEF DESCRIPTION OF DRAWINGS

FIG. 1 is a diagram of an implementation environment of a data processing method according to an embodiment of this application;
FIG. 2 is a flowchart of a data processing method according to an embodiment of this application;
FIG. 3 is a diagram of metadata storage according to an embodiment of this application;
FIG. 4 is a principle diagram of a data processing method according to an embodiment of this application;
FIG. 5 is a principle diagram of performing check based on user-defined metadata according to an embodiment of this application;
FIG. 6 is a principle diagram of another data processing method according to an embodiment of this application;
FIG. 7 is a principle diagram of another data processing method according to an embodiment of this application; and
FIG. 8 is a diagram of a hardware structure of a storage device according to an embodiment of this application.

### DESCRIPTION OF EMBODIMENTS

Implementations of this application are further described below in detail with reference to accompanying drawings.

The following describes key terms and key concepts in this application.

A ransomware virus is a computer virus that is spread in a form of emails, program Trojans, and Trojans on websites. The ransomware virus encrypts files by using various encryption algorithms, causing data tampering. Infection detection in embodiments of the present invention is applicable to ransomware virus infection detection and other virus infection detection.

A small computer system interface (small computer system interface, SCSI) is an independent processor standard for a system-level interface between a computer and an intelligent device (for example, a hard disk drive, a floppy drive, an optical disc drive, a printer, a scanner, or the like). SCSI is a complete data transmission protocol having a main function in transferring a command, status, and block data between a host and a storage device. The SCSI protocol is located between an operating system and an external resource, and has a series of functional components. The operating system may perform I/O operations on the external device (for example, a magnetic disk, a magnetic tape, an optical disc, a printer, or the like) according to the SCSI protocol. The SCSI protocol can be embedded into onboard logic of a device drive or a host adapter.

An internet small computer system interface (internet small computer system interface, iSCSI) is a storage technology based on the internet and an SCSI-3 protocol. The iSCSI combines an existing SCSI interface with an ethernet technology and connects an iSCSI serving end (Target) and an iSCSI client (Initiator) according to a transmission control protocol/internet protocol (transmission control protocol/internet protocol, TCP/IP). In this way, an encapsulated SCSI data packet can be transmitted over the common internet, and the iSCSI serving end can be mapped as a storage space (a hard disk drive) for a connected authenticated client.

A network file system (network file system, NFS) is a comprehensive file sharing protocol, and provides a network abstraction on the file system, to allow a remote client to access storage of a serving end over a network in a manner similar to that of a local file system.

A common internet file system (common internet file system, CIFS) is a transmission protocol, and CIFS uses a client/server mode. A client using the protocol can access a file on a remote serving end and ask the remote serving end to provide a service.

A logical block address (logical block address, LBA) is a general mechanism for describing a block where data is located on a computer storage device. The LBA may mean an address of a data block or a data block to which an address points.

A logical unit number (logical unit number, LUN) means a logical disk allocated from a hardware layer. When a host in a network is connected to a storage device, the host can identify an LUN of the storage device. The LUN is equivalent to a "physical hard disk drive" provided for the host. One or more partitions (blocks) may be further created on the "physical hard disk drive".

An object storage service (object storage service, OBS) is an object-based massive storage service, and provides a user with massive, secure, and highly reliable data storage capabilities, including bucket creation, modification, and deletion, as well as object upload, download, and deletion. The OBS basically includes a bucket (bucket) and an object (object). The bucket is a container for storing objects in the OBS. Each bucket has its own attribute, for example, a storage class, access permissions, and a region. A user can locate a bucket over the internet by using an access domain name of the bucket. The object is a basic data storage unit of the OBS. An object is actually a combination of file data and related attribute information.

Terms in this application further include redundant array of independent disks (redundant array of independent disks, RAID), host bus adapter (host bus adapter, HBA), user datagram protocol (user datagram protocol, UDP), non-volatile memory standard (non-volatile memory express, NVMe), non-volatile memory over fabrics (NVMe over fabrics, NVMe-oF), and software-defined network (software-defined network, SDN).

This application provides a data processing method. The method can be performed by a processor in a storage device, to effectively improve a speed at which a detection device performs infection detection on data stored in the storage device. An implementation environment of this application is described below.

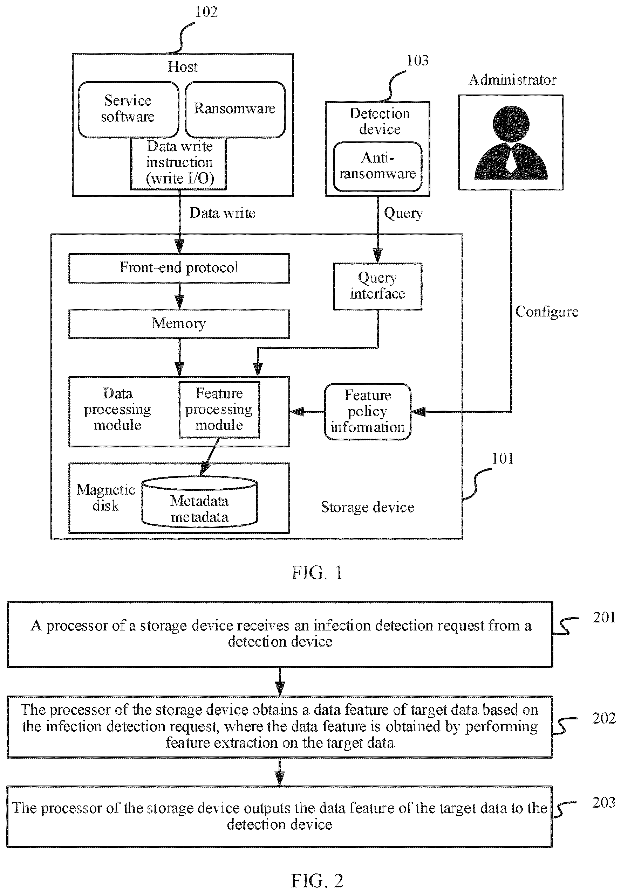

FIG. 1 is a diagram of an implementation environment of a data processing method according to an embodiment of this application. Refer to FIG. 1. The implementation environment includes a storage device 101, a host 102, and a detection device 103. The host 102 and the detection device 103 can communicate with the storage device 101 through a network. The storage device 101 is configured to provide a storage service for the host 102.

The storage device 101 can provide a data storage and management service. In some embodiments, the storage device 101 may be implemented based on a storage device cluster. The storage device cluster includes at least one storage device. The storage device cluster may be a server cluster including a server and a plurality of physical servers or a distributed file system, or a cloud server cluster that provides a basic cloud computing service, for example, cloud storage and a cloud service, a cloud database, cloud computing, a cloud function, a network service, cloud communication, a middleware service, a domain name service, a security service, a content delivery network (content delivery network, CDN), big data, and an artificial intelligence platform. This is not limited in this application.

In this embodiment of this application, the host 102 is a client, the storage device 101 is a serving end, and the host 102 can use the data storage and management service provided by the storage device 101. In some embodiments, the host 102 can store to-be-stored data in the storage device 101, and may further read data stored in the storage device 101.

In some embodiments, the host 102 runs normal service software. After the host 102 is maliciously intruded, ransomware is covertly run. The host 102 running a ransomware virus and the host 102 running the service software may be a same host (service node), or may be different hosts (service nodes). The service software is configured to communicate with the storage device 101, and read and write data in a storage space of the storage device 101. The ransomware is configured to tamper with the data in the storage device 101, that is, infect the data in the storage device 101.

Refer to FIG. 1. The service software or the ransomware in the host 102 can write data into the storage device 101 based on a data write instruction. A processor of the storage device 101 first writes data into a memory of the storage device according to a front-end protocol for communicating with the host 102, and then flushes the data from the memory of the storage device into a hard disk drive for data persistence. In addition to the hard disk drive, another persistent storage medium, for example, an SSD, may be further used. This is not limited in this application. In some embodiments, the front-end protocol may be SCSI, iSCSI, NFS, CIFS, or the like. This is not limited in this application.

The detection device 103 is configured to perform infection detection on the data, to be specific, detect whether the data is infected by a ransomware virus. Anti-ransomware runs in the detection device 103, and the anti-ransomware is configured to perform infection detection on the data in the storage device 101. Refer to FIG. 1. The anti-ransomware in the detection device 103 can obtain a data feature of the data through query by a query interface provided by the storage device 101, to determine, based on the obtained data feature, whether the data is infected by a ransomware virus.

In some embodiments, the host 102 and the detection device 103 may be in a form of a physical host (a computing device), a virtual machine, a container, or the like. This is not limited in this application. In some embodiments, the physical host may be a terminal device, for example, a smartphone, a desktop computer, or a laptop portable computer. This is not limited in this application.

In this embodiment of this application, the processor of the storage device receives an infection detection request from the detection device, and obtains a data feature of target data based on the infection detection request, to output the data feature of the target data to the detection device. The infection detection request is for detecting whether the target data is infected by a virus. The data feature is obtained by performing feature extraction on the target data. The data feature is used by the detection device to detect whether the target data is infected by a virus. For example, the target data is written by the host 102 into the storage device 101, and the infection detection request is sent by the detection device 103. Correspondingly, the storage device 101 outputs the obtained data feature to the detection device 103. Refer to FIG. 1. A manner in which the storage device 101 performs feature extraction on the data can be configured by an administrator (a user). For example, feature policy information configured by the user can indicate a manner of performing feature extraction on the data. A data amount of the target data is greater than a data amount of the data feature of the target data. The detected target data is a file, for example, a single file or a combination of a plurality of files.

In this application, when infection detection is performed on the target data in the storage device, there is no need to read a large amount of data and send the data to the detection device, and the processor of the storage device directly provides the data feature. In this way, communication load caused by data transmission is effectively reduced, performance consumption of the storage device is effectively reduced, and a speed of performing infection detection on the data in the storage device is improved. In addition, because frequent exposure of the data to the outside of the storage device is avoided, security of the data in the storage device is further improved.

In some embodiments, the foregoing network may be a wireless network or a wired network. The wireless network or the wired network uses a standard communication technology and/or protocol. The network includes but is not limited to any combination of a data center network (data center network), a storage area network (storage area network, SAN), a local area network (local area network, LAN), a metropolitan area network (metropolitan area network, MAN), a wide area network (wide area network, WAN), a mobile, wired, or wireless network, a private network, or a virtual private network. In some embodiments, technologies and/or formats including a hypertext markup language (hypertext markup language, HTML), an extensible markup language (extensible markup language, XML), and the like are used to represent data exchanged through the network. In addition, all or some links can be encrypted by using conventional encryption technologies such as a secure socket layer (secure socket layer, SSL), transport layer security (transport layer security, TLS), a virtual private network (virtual private network, VPN), and internet protocol security (internet protocol security, IPsec). In some other embodiments, customized and/or dedicated data communication technologies can be further used to replace or supplement the foregoing data communication technologies.

In embodiments of this application, there may be a plurality of processors in the storage device. The data processing method provided in this application is further described below based on the implementation environment provided in FIG. 1 by using a plurality of embodiments.

This application provides a flowchart of a data processing method. Refer to FIG. 2. The method is performed by a processor of a storage device, and the method includes step 201 to step 203 below.

201: The processor of the storage device receives an infection detection request from a detection device, where the infection detection request is for detecting whether target data is infected by a virus.

An storage interface card receives the detection request, and provides the detection request for the processor of the storage device.

For a function of the detection device, refer to the descriptions of the detection device 103.

The infection detection request carries storage space information, and the storage space information indicates a target storage space in which detected data is located in the storage device. The storage space information may also be collectively referred to as an address of the detected data.

In some embodiments, the storage device stores data in different storage manners. Correspondingly, the storage space information for describing the target storage space may be in different formats. For example, if the storage device stores data by using a block storage technology, the storage space information may include an LUN in which a file is located, an LBA of the LUN in which the file is located, and the like. If the storage device manages and organizes the stored data by using a file system, the storage space information may include various information such as a file identifier (file ID), a to-be-detected data segment range (indicated by an offset), an LUN in which a file is located, and an LBA of the LUN in which the file is located, to describe, in different granularities, a target storage space in which to-be-detected data is located. If the storage device stores data by using an object storage technology, the storage space information may include object information and a to-be-detected data segment range (indicated by an offset). For example, the object information may include a bucket identifier (bucket ID), an object name (key), and the like. The foregoing storage manners are merely examples, and a storage manner that can be used by the storage device is not limited in this application. In view of this, technical solutions provided in this application can be effectively applied to storage devices in various storage manners.

In some embodiments, the infection detection request is sent by anti-ransomware running on the detection device. The anti-ransomware can perform infection detection on data in the storage device, to detect in time data infected by a ransomware virus. The infection detection request may be sent for the target storage space in a process in which the anti-ransomware performs periodic detection, or may be triggered by an administrator for the target storage space. This is not limited in this application.

202: The processor of the storage device obtains a data feature of the target data based on the infection detection request, where the data feature is obtained by performing feature extraction on the target data.

The data feature is described below first. In some embodiments, the data is stored by using a file as a basic unit, and therefore the data feature is a feature of the file. Many different types of data, for example, source programs or executable programs, numbers or texts, images, music, and videos, can be stored in different types of files. A text file is a character sequence organized by line or page. A source file is a function sequence, and each function includes a declaration, an executable statement, and the like of the function. An executable file is a plurality of code segments that can be loaded into a memory for execution. In some embodiments, the data feature is extracted by using a file as a unit. For example, a data feature of one text file is an information entropy of a character sequence in the file. In some other embodiments, the data feature can be extracted by using a plurality of data segments in a file as a unit. For example, a data feature of one executable file includes information entropies of a plurality of code segments in the executable file. A feature extraction principle is described in detail below (step 1 and step 2), and details are not described herein.

In this embodiment of this application, the processor of the storage device further performs, in a process of running a task related to storage of the target data, feature extraction on the target data to obtain the data feature.

In-line calculation on the data feature includes, for example, the following cases: (1) In a process in which a host generates the target data, a host CPU that generates the target data in the host performs data feature calculation on the target data. (2) In a process in which the host sends the target data to the storage device, an interface card (a network interface card or a DPU) of the host that sends the target data performs data feature calculation on the target data. (3) In a process in which the storage interface card receives the target data, the interface card (a network interface card or a DPU) of the storage device that receives the target data in the storage device performs data feature calculation on the target data. (4) In a process in which a storage device CPU performs processing (for example, data compression, data decompression, storage space allocation, and data verification) on the target data, in-line calculation is performed on the data. Herein, "in a process" means, for example, that the target data is currently being processed, or means, for example, that the target data is still in a memory that can be accessed by a corresponding processor. For the foregoing four examples (1), (2), (3), and (4), the target data may be respectively in a memory of the host, a memory (which may be a memory on the interface card of the host or a memory that is of the host and that is allowed to be accessed by the interface card of the host according to different situations) that can be accessed by the interface card of the host, a memory of the storage device, and a memory (which may be a memory on the storage interface card or a memory that is of the storage device that is allowed to be accessed by the storage interface card according to different situations) that can be accessed by the storage interface card.

In other words, in a data storage process, from generation of to-be-stored data to final storage in a persistent storage medium, the data is originally processed sequentially by a plurality of processors having a calculation capability for final storage, and the processors that sequentially perform processing are paths for transferring the data for storage. In this application, in addition to performing calculation on the data for data storage, the processors further perform other calculation operations (for example, data feature calculation) on the data, without a need of sending the data to another processor or another processing device. These calculation operations are in-line calculation.

In this application, without changing a mode of service interaction between the host and the storage device, a data feature calculation task may be deployed in the processor of the storage device for execution. Details are described below.

In some embodiments, a manner in which the processor of the storage device performs feature extraction includes Manner A and Manner B below.

Manner A: The processor of the storage device extracts the data feature in a process of executing a data write task.

In some embodiments, a data storage-related task executed by the processor of the storage device includes the data write task.

For example, before performing step 202, the processor of the storage device executes the data write task for the target data. In a process of writing the target data into the target storage space, the processor of the storage device performs feature extraction on the target data, and stores the data feature of the target data in a form of metadata (certainly, may alternatively store the data feature in a form of non-metadata). Therefore, when receiving the infection detection request, the processor of the storage device can obtain the data feature from the stored metadata based on the infection detection request and directly output the data feature to the detection device. This effectively improves infection detection efficiency. A principle of extracting the data feature by the processor of the storage device in the process of executing the data write task is described below in detail by performing step 1 and step 2 below.

Step 1: In response to a write request from the host, before the target data is written into the target storage space of the storage device, the processor of the storage device performs feature extraction on the target data to obtain the data feature.

The write request carries the target data. The target storage space is a persistent storage space provided by the storage device. The storage space is a local storage space (provided by a local hard disk drive or a local SSD of the storage device) of the storage device, or a remote storage space managed by the storage device. In response to the write request, the processor of the storage device divides the target storage space into a storage space corresponding to to-be-written data (target data). After the target data is written, a computing device can determine storage space information of the target data based on related information about the target storage space, for example, any one of an LUN and an LBA of the LUN, a file ID, or object information. In some embodiments, the write request is from the host 102 and is generated by the service software.

In some embodiments, the processor is a central processing unit (referred to as a storage device CPU for short) of the storage device, and the storage device CPU communicates with the memory of the storage device and the storage interface card through a bus. In a process in which the storage device CPU stores the target data, the storage device CPU performs calculation on the target data to generate the data feature. In this example, the data write task executed by the storage device CPU includes a caching phase and a flushing phase.

It should be noted that a conventional computer has only one processor, that is, a central processing unit (CPU). With the development of computer technologies, some storage devices have a plurality of processors. In addition to an original CPU (main processor), the storage devices further include a plurality of auxiliary processors. These auxiliary processors are distributed in components such as a network interface card, an HBA card, a GPU card, and a RAID card. Both the main processor and the auxiliary processor are processors in the device. To distinguish between the main processor and the auxiliary processor, unless otherwise specified, the "CPU" in embodiments of this application specifically means the main processor (or a main CPU), for example, a CPU manufactured by INTEL^{®} company or AMD^{®} company. The main CPU is generally directly installed on a mainboard of the storage device, for example, inserted into a CPU slot of the mainboard through a pin. The main CPU is responsible for main functions of the devices (the host and the storage device) and manages other boards.

In the caching phase, the storage device CPU first writes the target data into the memory of the storage device. For example, the storage interface card receives the target data, stores the target data in an input/output (I/O) register of the interface card, and sends instructions to the storage device CPU. The storage device CPU receives the instructions, reads the target data from the I/O register to a CPU register, and then writes the target data from the CPU register to the memory of the storage device. In the flushing phase, the storage device CPU flushes the target data in the memory of the storage device into the persistent storage space, that is, writes the target data into the target storage space of the storage device.

In some embodiments, before writing the target data into the target storage space, the storage device CPU performs feature extraction on the target data. Writing the target data into the target storage space means completing persistence of the target data in the target storage space. Refer to the foregoing caching phase and the foregoing flushing phase.

In a possible case, the storage device CPU synchronously calculates the data feature of the target data in the flushing phase. An example in which the target storage space is a target data block in the hard disk drive is used. In a process of flushing the target data into the target data block from the memory of the storage device, the storage device CPU performs in-line calculation on the data feature of the target data. In some embodiments, the storage device CPU executes the data write task in a plurality of time periods. For example, the storage device CPU performs background scheduling by using a plurality of threads, and asynchronously performs a flushing operation and a data feature calculation operation. The storage device CPU occupies the time periods in turn based on different threads. The different threads are respectively used for performing a flushing operation and a data feature calculation operation. For example, a first thread performs a flushing operation, and a second thread performs a feature calculation operation on data in the memory. For example, the time period is a CPU time slice. An implementation of the foregoing process is: performing a flushing operation on a data segment 1 in the data in a CPU time slice 1; performing a data feature calculation operation on the data segment 1 in a CPU time slice 2 after the CPU time slice 1; performing a flushing operation on a data segment 2 in the data in a time slice 3 after the CPU time slice 2; and so on.

In another possible case, after the flushing phase is completed, the storage device CPU calculates the data feature of the target data. An example in which the target storage space is a target data block in the hard disk drive is used. After the target data is written into the target data block from the memory of the storage device, the storage device CPU calculates the data feature of the target data.

In still another possible case, in the caching phase, in a process of transferring the target data from the register to the memory of the storage device, the storage device CPU performs in-line calculation on the data feature of the target data.

In some other embodiments, the processor is a processing unit of the storage interface card (a storage interface card processor for short), the storage interface card is managed by the storage device CPU, and the storage interface card further communicates with the host through a network. In this example, in a process in which the storage interface card receives the target data sent by the host, the storage interface card processor may perform calculation on the target data to generate the data feature. The processing unit of the interface card may be a processor chip manufactured by the ARM^{®} company, an application-specific integrated circuit (application-specific integrated circuit, ASIC) processor, a field-programmable gate array (field-programmable gate array, FPGA) processor, or a combination thereof.

For example, the storage interface card processor can complete extraction of the data feature in the foregoing caching phase. In the caching phase, the storage interface card receives the target data from the host, and the storage interface card processor may perform feature extraction on the target data, so that in a process of transmitting the target data to the memory of the storage device (a main memory of the storage device), the data feature is also transmitted to the memory of the storage device for caching. For example, the storage interface card can apply to the storage device CPU for a right to use the bus in a direct memory access (direct memory access, DMA) manner, to write the target data into the memory of the storage device without scheduling by the CPU. In this process, the storage interface card processor may perform in-line calculation on the data feature. It should be noted that the caching phase of the storage interface card processor not only means a phase of caching the target data in the memory of the storage device, but may also mean a phase of caching the target data in a cache built in the storage interface card.

The foregoing technical solution describes a principle of performing in-line calculation on the data feature when the storage device CPU and the storage interface card processor execute a data storage-related task. The storage interface card is used as a communication interface in the storage device, and an original function of the storage interface card relates to processing on the target data, for example, parsing of a data packet (for example, a TCP data packet or a UDP data packet), mapping and conversion of a data storage address, data decompression, data encryption, rewriting of a packet header of a data packet, connection tracking, statistics collection of received data, erasure code calculation on data, NVMe-oF acceleration, NVMe/TCP acceleration, I/O virtualization (VirtIO) acceleration, hierarchy QoS for different data, and SDN acceleration. In view of this, the storage interface card processor is used to perform in-line calculation on the data feature. In this way, computing power of the interface card and a network interface position of the interface card in a transmission link can be efficiently used, to reduce a communication delay, improve calculation efficiency, and reduce overall energy consumption.

According to the foregoing technical solution, calculation and storage load caused by data reading, data feature calculation, data feature storage, and other processes may be offloaded from the detection device that performs infection detection to the storage device CPU and the storage interface card processor in a data transmission link. In some embodiments, the interface card is an intelligent network interface card (the data processing unit DPU may alternatively be considered as an intelligent network interface card). The interface card may be alternatively replaced with a communication module or a network device integrated with a DPU. This is not limited in this application. The network interface card can offload data processing functions in a network, a storage, and an operating system to hardware for execution, to improve a data processing capability of the storage device and release CPU computing power. Therefore, the network interface card bears processing works of the storage device, to reduce calculation load of the storage device, and improve data processing efficiency.

Step 2: The processor of the storage device stores the data feature as metadata of the data in the target storage space.

In some embodiments, the processor of the storage device may store the data feature as the metadata of the data according to a plurality of methods. Two optional storage methods are described below.

Storage method 1: The metadata is stored in a centralized manner.

In some embodiments, the storage space of the storage device is divided into a metadata storage space dedicated for metadata storage and a storage space not dedicated for metadata storage. In the metadata storage space, the processor of the storage device may store the data feature as the metadata of the data in the target storage space. A manner of respectively storing the metadata and the data in different storage spaces can facilitate management of the metadata.

In some embodiments, by using the object storage technology, the storage device stores the data in a data server and stores the metadata of the data in a metadata server. In this case, the target storage space is a storage space in an object server. For example, for an object 1 (object 1) in a bucket A (bucket A), the metadata storage space may be a metadata storage space corresponding to the bucket A in the metadata server.

Storage method 2: The metadata and the data are stored together.

In some embodiments, the storage device stores the data feature in the target storage space as the metadata of the data. In this example, the data feature is used as a part of the metadata, and the storage device stores the data and the metadata in a segment of continuous data. In the storage manner 2, associated storage of the metadata and the data can be maintained, to avoid a case in which metadata cannot be obtained because a fault occurs on the metadata server when the metadata is stored in a centralized manner, so as to reduce impact of the fault on metadata reading, and improve storage reliability.

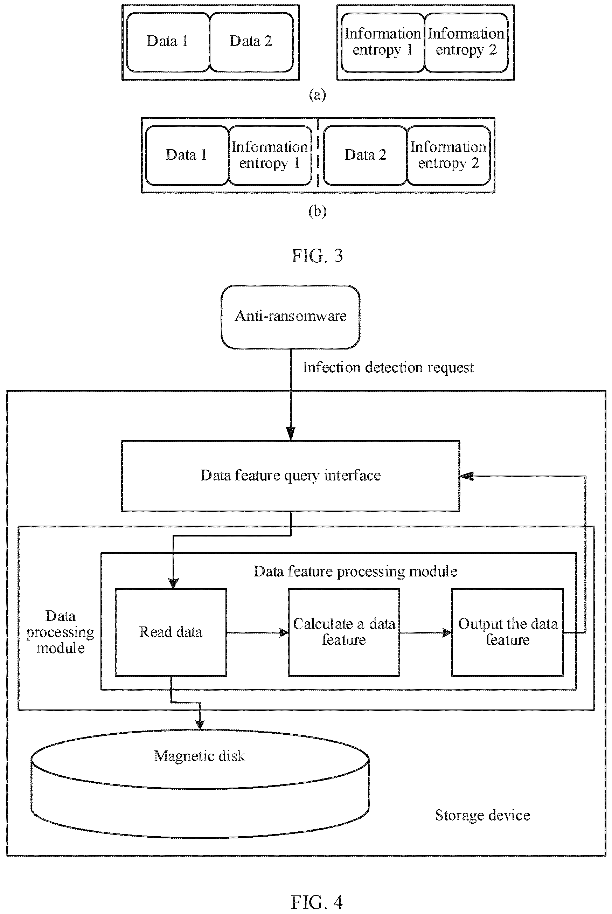

For ease of understanding, this application provides a diagram of metadata storage. Refer to FIG. 3. In FIG. 3, an example in which a data feature is an information entropy is used. Metadata of data 1 includes an information entropy 1, and metadata of data 2 includes an information entropy 2. (a) in FIG. 3 shows the storage manner 1. The data 1 and the data 2 are stored in a target storage space, and the information entropy 1 and the information entropy 2 as the metadata are stored in a metadata storage space. (b) in FIG. 3 shows the storage manner 2. The data 1 and the information entropy 1 are stored in a block of contiguous storage spaces in the target storage space, and the data 2 and the information entropy 2 are stored in a next block of contiguous storage spaces in the target storage space.

Manner B: When receiving the infection detection request, the processor of the storage device extracts the data feature in real time.

In some embodiments, after receiving the infection detection request, the processor of the storage device performs, based on the infection detection request, feature extraction on the data stored in the target storage space indicated by the infection detection request, to obtain the data feature, so as to output the data feature obtained through real-time calculation to the detection device.

In some embodiments, the storage device provides a query interface for the detection device, where the query interface is for querying the data feature of the data. The anti-ransomware can send, to the storage device through the query interface, the infection detection request carrying the storage space information such as the LUN and the file ID, to indicate the storage device to obtain the data feature of the target data and output the data feature to the detection device.

In some embodiments, the query interface defines a format of the infection detection request and a format of a response message of the request. For example, the infection detection request includes the storage space information (including the LUN/the file ID and the data segment range). In some other embodiments, the infection detection request further carries an identifier indicating whether to perform feature extraction and a sampling manner (for example, a sampling ratio) used for performing feature extraction on the data. Correspondingly, the response message includes a data feature (which may be at least one of a distribution feature and a set including the following interval data features) corresponding to the data.

The foregoing provides a technical solution for extracting the data feature in real time. The data feature is not calculated when the data is written, but the data feature is calculated by reading the stored data when the infection detection request is received. In this way, data transmission load can be effectively reduced, storage pressure of the storage device can be effectively reduced, and performance of the storage device is improved.

To facilitate understanding of an execution procedure of Manner B, this application provides a principle diagram of a data processing method. Refer to FIG. 4. A storage device receives, through a query interface, an infection detection request sent by anti-ransomware, where the infection detection request carries information such as an LUN or a file ID of corresponding data. A data feature processing module in the storage device reads data from a target storage space based on the information carried in the infection detection request, performs data feature calculation, and returns a calculated data feature to the query interface. The data feature processing module may be included in a data processing module. The data processing module is a logical representation, and indicates a functional module responsible for data processing, for example, a CPU, in the storage device.

A plurality of execution entities and a plurality of execution occasions of calculating the data feature are mainly described in Manner A and Manner B. A specific process in which the processor of the storage device performs feature extraction is described below. A method provided in step 1 and step 2 below is applicable to any one of the foregoing execution entities at any one of the foregoing execution occasions.

In this embodiment of this application, a process in which the processor of the storage device performs feature extraction on the data stored in the target storage space to obtain the data feature may be implemented by performing step 1 and step 2 below.

Step 1: Perform feature extraction on data in at least one unit sampling interval of the target storage space in a sampling manner for the target storage space, to obtain an interval data feature of the at least one unit sampling interval.

In this embodiment of this application, the data feature may be an information entropy of the data, and the information entropy indicates uncertainty of the data. When the data is tampered with due to virus infection, the uncertainty is greatly increased. Therefore, whether the data is infected can be determined by checking whether the information entropy changes obviously. Correspondingly, the interval data feature of the unit sampling interval is an information entropy of a data segment corresponding to the unit sampling interval.

In some other embodiments, the data feature may alternatively be a digest of the data. In some embodiments, the digest of the data may be generated by using a plurality of digest generation algorithms, so that a segment of data is uniquely identified by using the digest. When the data is tampered with due to virus infection, the digest of the data also changes. Therefore, whether the data is infected may be determined by checking whether the digest changes. For example, the digest generation algorithm may be a message digest algorithm 5 (message digest algorithm 5, MD5), or may be a secure hash algorithm 1 (secure hash algorithm 1, SHA1). This is not limited in this application.

The sampling manner indicates a manner of extracting, from the target storage space, data used for calculating a data feature. In some embodiments, the sampling manner indicates a sampling ratio: 1 KB data is sampled every 10 kilobytes (KB) to calculate a data feature. In this example, the unit sampling interval may be determined based on a size of a data segment defined by the sampling ratio. For example, if 1 KB data is sampled every 10 kilobytes (KB), the unit sampling interval is a data segment of 10 KB.

In some embodiments, the sampling manner indicates a sampling frequency and a sampled data amount: 100 points are extracted from each 1 MB data, and 1 KB data is extracted from each sampling point to calculate a data feature. In some embodiments, the sampling manner further indicates a location at which a data segment is sampled. For example, for a data segment of 10 KB, the sampling manner may indicate to extract the first 1 KB of data of the data segment to calculate a data feature. In this example, the unit sampling interval may be determined based on a size of the data in the target storage space and the sampling manner. The size of the data in the target storage space may be determined based on an offset.

Table 1 is a data feature table provided in this application. An example in which data whose file ID or logical unit number LUN is "1234" is used. A storage location 1 MB away from an initial address of the file "1234" is used as a start address for calculating an offset, and feature extraction is performed on a data segment whose offset is 1 MB in the sampling manner of sampling 1 KB every 10 KB, to obtain information entropies shown in Table 1.

**Table 1**

| LUN or file ID | Offset | Information entropy |
|---|---|---|
| 1234 | 1 MB 0 KB | 3.2 |
| 1234 | 1 MB 10 KB | 3.1 |
| 1234 | 1 MB 20 KB | 3.1 |
| ... | ... | ... |

As shown in Table 1, 1 MB 0 KB is used as a sampling start location. The information entropy obtained through calculation by sampling 1 KB data in the unit sampling interval from 0 KB to 10 KB is "3.2", and the information entropy obtained through calculation by sampling 1 KB data in the unit sampling interval from 10 KB to 20 KB is "3.1". Similarly, details are not described herein, and "..." in Table 1 indicates omission. The information entropies in Table 1 are the interval data features corresponding to the unit sampling intervals.

In the foregoing technical solution, data is sampled by using an interval, so that a data feature can be more representative for the entire data, to improve accuracy of subsequent infection detection based on the data feature.

In some other embodiments, the sampling manner further indicates a manner of performing statistical analysis on a data feature. For example, 100 points are extracted from every 1 MB data for data feature calculation, to obtain 100 data feature points. A statistical analysis manner may be classifying data of each data feature point and counting a quantity for each classification.

In some embodiments, a feature extraction algorithm may alternatively be indicated by a sampling manner. The sampling manner can be stored in a form of feature policy information. For example, the feature policy information includes a plurality of fields. A first field is for recording a sampling ratio. A second field is for recording a sampling frequency and a sampled data amount. A third field is for recording a sampling start location. For example, a value of the third field being 1 indicates that extraction starts from the first 1 KB, and a value of the third field being 0 indicates that extraction starts back from the last 1 KB. A fourth field is for recording a feature extraction algorithm. For example, for the fourth field, a value of 1 indicates an information entropy algorithm, a value of 2 indicates MD5, and a value of 0 indicates SHA1.

In some embodiments, the storage device can provide, for a user in a form of an application programming interface, a service of configuring feature policy information. In response to a feature policy configuration instruction for the storage device, the storage device obtains feature policy information for the storage device, where the feature policy information indicates a sampling manner of performing feature extraction on data in the storage device. For example, more or fewer fields corresponding to the foregoing feature policy information may be configured by using an input operation of the user.

The foregoing technical solution provides a flexible and configurable data feature extraction mechanism, so that data extraction can be performed in a plurality of sampling manners, and a plurality of different feature extraction algorithms can be flexibly switched for a plurality of types of data features, to improve data processing efficiency and improve effects of performing infection detection by using data features in different dimensions.

Step 2: Generate the data feature of the data in the target storage space based on the at least one interval data feature.

In some embodiments, a set including the at least one interval data feature can be directly determined as the data feature of the data in the target storage space. Table 1 is a table form of the set including the at least one interval data feature. In Table 1, "information entropies" of a plurality of unit sampling intervals corresponding to the data "1234" are a plurality of interval data features of the data. In this example, the data feature of the data in the target storage space is an information entropy of a plurality of data segments.

According to the foregoing manner, the data feature of the data can be determined by using a data sampling interval as a granularity, so that reliable data support can be provided for infection detection, to improve a speed and accuracy of infection detection.

In some other embodiments, a distribution feature of the at least one unit sampling interval can be determined based on a quantity of unit sampling intervals corresponding to a type of the at least one interval data feature, and the distribution feature is determined as the data feature of the data in the target storage space. The distribution feature indicates a quantity distribution status of unit sampling intervals of the target storage space for different types. For example, if the interval data feature is an information entropy, each information entropy may be used as one type. Refer to Table 1. Interval data feature types corresponding to the file ID "1234" include "3.1" and "3.2". Correspondingly, a quantity of unit sampling intervals corresponding to each information entropy can reflect a statistical distribution feature of the data feature of the data in the target storage space.

Table 2 is a data distribution feature table provided in this application. For a file whose file ID or LUN is "1234", a storage location 1 MB away from an initial address of the file "1234" is used as a start address for calculating an offset, and feature extraction is performed on a data segment whose offset is 1 MB in the sampling manner of sampling 1 KB every 10 KB, and obtained information entropies include three values: "3.1", "3.2", and "3.3". In this case, a data distribution feature of the file "1234" is shown in Table 2.

**Table 2**

| LUN/File ID and offset | Information entropy | Quantity |
|---|---|---|
| 1234 and 1 MB | ... | ... |
| | 3.1 | 10 |
| | 3.2 | 50 |
| | 3.3 | 38 |
| | ... | ... |

As shown in Table 2, a quantity of unit sampling intervals for the information entropy "3.1" is "10", a quantity of unit sampling intervals for the information entropy "3.2" is "50", a quantity of unit sampling intervals for the information entropy "3.3" is "38", and "..." in Table 2 indicates omission. The information entropies in Table 2 are interval data features corresponding to the unit sampling intervals.

According to the foregoing manner, the data feature of the data may be determined from a perspective of statistical distribution, so that a data segment in which an anomaly occurs in the data feature can be quickly detected, to improve a speed and accuracy of infection detection.

In some embodiments, the data feature of the data may be at least one of a distribution feature and a set including the foregoing interval data features. This is not limited in this application.

203: The processor of the storage device outputs the data feature of the target data to the detection device, where the data feature is used by the detection device to detect whether the data is infected by a virus.

The storage device communicates with the detection device through the interface card. Therefore, if the processor of the storage device is the storage device CPU, the CPU outputs the data feature of the target data to the detection device through the interface card. If the processor of the storage device is the processor in the storage interface card, the interface card directly outputs the data feature of the target data to the detection device without using the CPU.

For descriptions of the detection device, refer to the descriptions of the detection device 103. Details are not described herein.

In some embodiments, the storage device provides a query interface, where the query interface is for querying the data feature of the data. The anti-ransomware running on the detection device can send, to the storage device through the query interface, the infection detection request carrying the storage space information such as the LUN and file ID. After obtaining the data feature, the storage device includes, to the response message for the infection detection request, the data feature (which may be the at least one of the distribution feature and the set including the foregoing interval data features) corresponding to the data.

In this application, when infection detection is performed on the target data in the storage device, there is no need to read a large amount of data and send the data to the detection device, and the processor of the storage device directly provides the data feature. In this way, communication load caused by data transmission is effectively reduced, network congestion between the storage device and the detection device caused by virus detection is effectively reduced, and a speed of performing infection detection on the data in the storage device is improved. In addition, because frequent exposure of the data to the outside of the storage device is avoided, security of the data in the storage device is further improved.

Further, a plurality of manners are provided for performing data feature extraction at different occasions, to be flexibly applied to different storage scenarios. The storage device further provides a user-defined and scalable data offloading mechanism, and a user can configure feature policy information for data feature extraction. In this way, availability of the method in different types of storage devices is greatly improved.

This application further provides another data processing method. The method is a user-defined virus detection method provided by a storage system, and supports a user in defining user-defined metadata used for virus detection in the storage system (or a storage device) and a detection rule for the user-defined metadata. In this application, in response to an infection detection request, a processor of the storage device outputs a detection result based on the user-defined metadata and the detection rule of data. In a possible implementation, the storage device receives a write request from a host. The write request carries target data and the user-defined metadata. The user-defined metadata is for virus infection detection in the storage device. For example, the user-defined metadata may be a reliability identifier (for example, an integrity tag of NFSv4) provided by a front-end protocol, a key, a specific character string, or attribute data of a user-defined type. The user-defined metadata may alternatively be associated with a service system, for example, a reliability identifier carried in data written by normal service software into the storage device or a service identifier ID associated with service software or the service system. The user-defined metadata may alternatively be a meaningless character (for example, a magic number) that does not affect a data function. This is not limited thereto in this application. The user-defined metadata can be used as a security identifier when data is normally written, and is used to determine whether the data is infected in a subsequent infection detection process.

In some embodiments, after receiving an infection detection request of any device for the data in the storage device, the processor of the storage device performs ransomware detection based on the user-defined metadata of the data. The device sending the infection detection request may be the host, or may be a detection device. This is not limited in this application.

In some embodiments, infection of the data causes the user-defined metadata to change. Therefore, whether the data is infected may be determined by detecting whether the user-defined metadata changes. For example, if the user-defined metadata does not meet a target value or is not within a target value range, a first detection result is output, where the first detection result indicates that the data is tampered with, that is, the data may be infected by a ransomware virus. If the user-defined metadata meets the target value or is within the target value range, a second detection result is output, where the second detection result indicates that the data is not tampered with, that is, the data is not infected by a ransomware virus. In view of this, the storage device can efficiently provide a reliable infection detection result for the outside based on the user-defined detection rule without exposing the data, to improve data security. In addition, if the storage device obtains the first detection result, the storage device may directly output a conclusion that the data is infected by a ransomware virus; or output a possibility of being infected; or may further perform more accurate infection detection on the data based on a data feature and a ransomware detection algorithm, to output a ransomware detection result that can be used as a reference. The foregoing detection rule of performing detection based on the target value range and the target data is merely a possible implementation. The detection rule may vary depending on different types of user-defined metadata. This is not limited thereto in this application.

According to the foregoing technical solution, metadata may be defined by the user by using information such as a storage protocol or a service identifier, and the user-defined detection rule is used to efficiently determine whether the data is infected by the ransomware virus, to improve efficiency and a speed of infection detection.

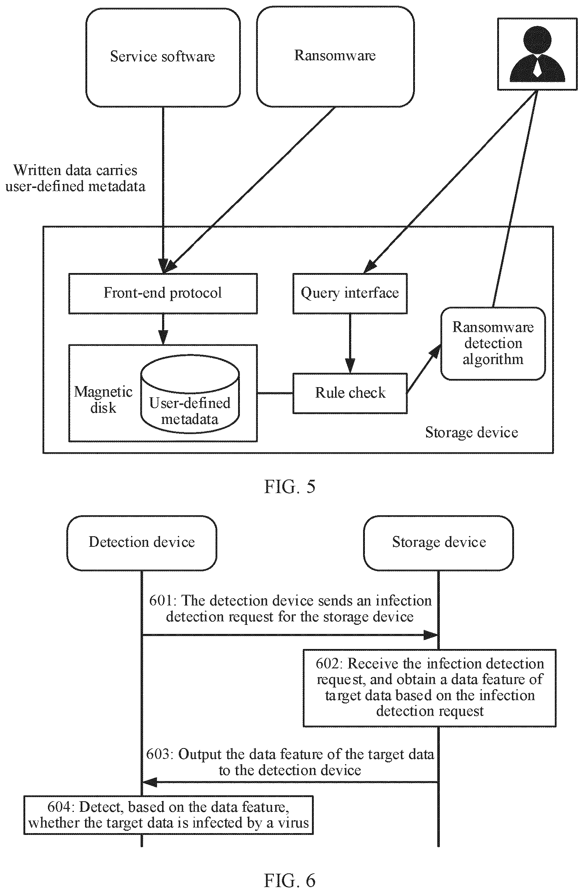

FIG. 5 is a principle diagram of performing check based on user-defined metadata according to this application. Refer to FIG. 5. When a service system writes data, the user-defined metadata is carried, and a storage device makes the user-defined metadata persistent in a hard disk drive. When receiving an infection detection request for the data, the storage device may read the persistent user-defined metadata, and perform ransomware detection according to a detection rule. If the user-defined metadata in the data has been tampered with currently, a conclusion that the data is infected by a ransomware virus may be directly output; a possibility of being infected is output; or a ransomware detection algorithm is used to further detect whether the data is infected by a virus.

In some embodiments, the detection device and the storage device may be considered as a data processing system for implementing data infection detection in collaboration. An interaction process between the detection device and the storage device is described based on the foregoing content in FIG. 1 to FIG. 5. This application provides a principle diagram of a data processing method. Refer to FIG. 6. The data processing method includes step 601 to step 604 below. For a function of the detection device, refer to the detection device 103.

601: The detection device sends an infection detection request for the storage device, where the infection detection request is for detecting whether target data in the storage device is infected by a virus.

For the infection detection request in this step, refer to the descriptions of the infection detection request in step 201. Details are not described. In some embodiments, the detection device sends the infection detection request to a query interface.

602: The storage device receives the infection detection request, and obtains a data feature of the target data based on the infection detection request, where the data feature is obtained by performing feature extraction on the target data.

For this step, refer to step 201 and step 202. Details are not described herein.

603: The storage device outputs the data feature of the target data to the detection device.

For this step, refer to step 203. Details are not described herein.

604: The detection device detects, based on the data feature, whether the target data is infected by a virus.

In some embodiments, the data feature is an information entropy, and the information entropy indicates uncertainty of the data. An implementation process of step 604 includes: if the information entropy exceeds a target information entropy interval, determining that the data is infected by a virus, where the target information entropy interval indicates a range of an information entropy of uninfected data. The target information entropy interval may be set by an administrator, or may be periodically updated based on a sampling result of an information entropy of normal data. This is not limited in this application.

In some embodiments, the data feature is a digest, and the digest is a segment extracted from the data and is for identifying the data. An implementation process of step 604 includes: if the obtained digest of the data is inconsistent with a check digest, determining that the data is infected by a virus, where the check digest is a digest obtained when the data stored in the detection device is not infected. In some embodiments, the check digest is a digest of the data that is stored when it is determined that the data is not infected when it is detected whether the data is infected last time.

In the technical solution provided in this application, when infection detection is performed on the data in the storage device, there is no need to read a large amount of data and send the data to the detection device that requests to perform infection detection, and the storage device directly outputs a determined data feature of the data. In this way, communication load caused by data transmission is effectively reduced, and network congestion between the storage device and the detection device caused by virus detection is effectively reduced. The detection device directly performs detection based on the obtained data feature, to reduce time consumed by disk reading and data transmission, and improve a speed of performing infection detection on the data in the storage device. In addition, because frequent exposure of the data to the outside of the storage device is avoided, security of the data in the storage device is further improved.

In embodiments corresponding to FIG. 2 and FIG. 6, the processor of the storage device is used as an execution entity to describe the data processing method provided in this application. In some other embodiments, in this application, the host can perform a data feature extraction process, to offload calculation and storage load caused by processes such as data reading, data feature calculation, and data feature storage from the detection device that performs infection detection to the host. The interface card of the host is used as a communication interface on a host side, and an original function of the interface card of the host relates to target data processing, for example, encapsulating a data packet, and mapping and converting a data storage address. In view of this, a host interface card processor is used to perform in-line calculation on the data feature. In this way, computing power of the interface card and a network interface position of the interface card in a transmission link can be efficiently used, to reduce a communication delay, improve calculation efficiency, and reduce overall energy consumption.

In some embodiments, a process in which the host determines the data feature includes two cases. In one possible case, the host CPU calculates the data feature. Refer to in-line calculation on the data feature in Case (1). Specifically, in a process of generating the target data, the host CPU performs in-line calculation on the target data to generate the data feature. In the other possible case, a processing unit of the interface card of the host (host interface card processor for short) calculates the data feature. Refer to in-line calculation on the data feature in Case (2). In a process in which the interface card of the host sends the target data to the storage device, the host interface card processor performs in-line calculation on the target data to generate the data feature.

In view of this, the storage device receives the data feature from the host, and sends, in a manner similar to the foregoing manner, the data feature to a storage medium of the storage device for persistent storage. For example, the data feature is stored as the metadata of the data in the target storage space.

In some embodiments, the network device between the host and the storage device may alternatively perform in-line calculation on the data feature. The network device is a hardware device that is configured to connect devices such as a server, a personal computer, and a terminal to form a communication network. For example, the network device may be a device such as a switch, a router, a firewall, a bridge, a hub, a gateway, a network interface card, or a wireless access point (wireless access point, WAP). This is not limited in this application.

In some related technologies, anti-ransomware that performs infection detection obtains data from a storage device, to perform ransomware detection based on the obtained data. In this process, an operation is performed by a processor of a detection device running the anti-ransomware, and data feature calculation and storage are also carried by a running memory of the anti-ransomware. Consequently, a speed of ransomware detection is limited by performance of the detection device, and a speed of infection detection is not high. In the data processing method provided in this application, a process of calculating the data feature can be performed by the storage device CPU, the storage interface card, the host CPU, the interface card of the host, and another network device in an in-line manner, to effectively offload calculation and storage load from the detection device that performs infection detection to the storage device and the entire data transmission link. In this way, network congestion between the storage device and the detection device caused by virus detection is reduced, and a speed of performing infection detection on the data in the storage device is improved.

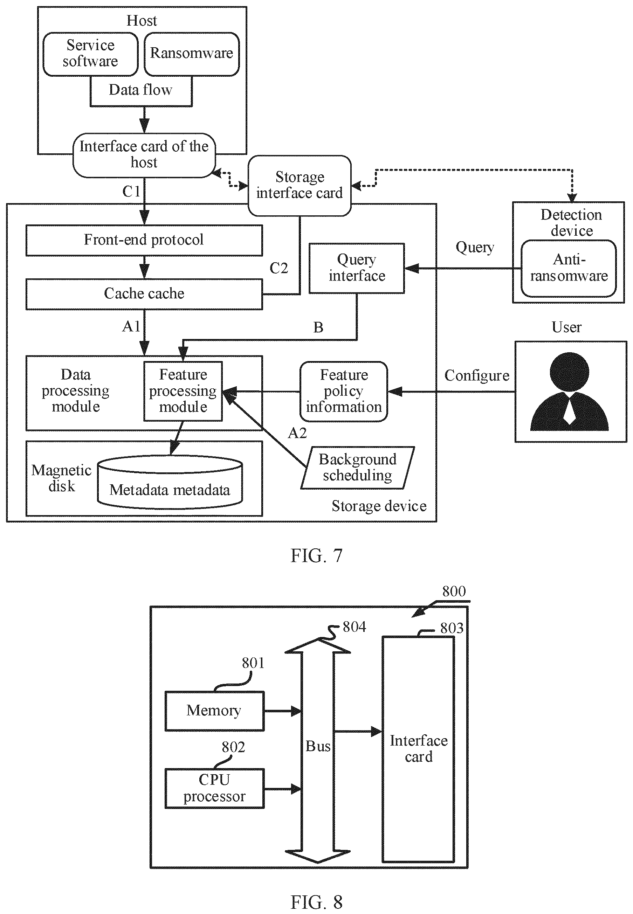

The foregoing principle of implementing the data processing method by an execution entity such as the processor of the storage device and the host is described below. FIG. 7 is a principle diagram of a data processing method according to an embodiment of this application. For a basic architecture principle of FIG. 7, refer to the descriptions of FIG. 1. Refer to FIG. 7. A black solid line arrow indicates data transmission, and a black dashed line arrow indicates a connection relationship. In other words, an interface card of a host is connected to a storage interface card, and a detection device is connected to the storage interface card.

In FIG. 7, feature policy information may be configured by a user through an application programming interface provided by a storage device. Refer to the foregoing configuration process of the feature policy information. Details are not described herein.

In FIG. 7, a link indicated by A1 corresponds to the process in which the storage device CPU performs in-line calculation on the data feature in the flushing phase described in Manner A: When data is written, the data is sampled in a sampling manner based on an LUN and an LBA of the LUN or an offset of a file/an object (refer to step 1); an information entropy of the data is calculated based on the sampled data, and the information entropy is determined as metadata of the data (where the metadata further includes an offset and a data length (length)); and the information entropy is persistently stored to a hard disk drive as a part of the metadata.

In FIG. 7, a link indicated by A2 corresponds to the process, described in Manner A, in which the background scheduling is performed to asynchronously implement in-line calculation on the data feature in the storage device. For a principle, refer to A1. Optionally, the background asynchronous calculation on the information entropy of the data is performed according to a user-defined feature sampling policy.

In FIG. 7, a link indicated by B corresponds to the process of extracting the data feature in real time described in Manner B: When an online infection detection request is received, an information entropy is calculated in real time, or a data feature is calculated based on user-defined feature policy information.

In FIG. 7, a link indicated by C1 corresponds to a case in which the interface card of the host performs in-line calculation on the data feature. In this case, data feature calculation is offloaded to network transmission on a host side. The interface card of the host may be a DPU or a network device including a DPU module. For a principle, refer to A1. The storage device provides a metadata write interface for the interface card.

In FIG. 7, a link indicated by C2 corresponds to a case in which the storage interface card performs in-line calculation on the data feature. In this case, data feature calculation is offloaded to network transmission on a storage side. The interface card includes a DPU. For a principle, refer to A1. The storage device provides a metadata write interface for the DPU. The interface card may calculate the information entropy in real time or calculate the data feature based on the user-defined feature policy information.

In this application, when infection detection is performed on data in the storage device, there is no need to read a large amount of data and send the data to a node that requests to perform infection detection, and the storage device directly provides the data feature of the data. In this way, communication load caused by data transmission is effectively reduced, network congestion between the storage device and the detection device caused by virus detection is effectively reduced, and a speed of performing infection detection on the data in the storage device is improved. In addition, a plurality of manners are provided for processors of a plurality of types to perform data feature extraction at different occasions, to be flexibly applied to different storage scenarios. The storage device further provides a user-defined and scalable data offloading mechanism, and a user can configure policy information for data feature extraction. In this way, availability of the method in different types of storage devices is greatly improved.

Further, an execution entity of a data feature extraction process can be extended from the processor of the storage device and the storage interface card processor to the processor of the host and the interface card of the host in the data transmission link, and the data processing method provided in this application can be used on both a service side and a client of the storage device. In this way, in-line calculation can be implemented along the data transmission link in the entire process, and calculation and storage load of the storage device can be offloaded to another hardware based on a requirement, to greatly improve a speed of infection detection.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, both the file and the metadata in this application are obtained under full authorization.

The following describes a hardware structure of a device in this application.

An embodiment of this application provides an interface card, including an interface and the processor described above.

The interface is configured to install the interface card in a storage device, and communicate with a central processing unit of the storage device after the interface card is installed in the storage device. The processor performs the foregoing data processing method after the interface card is installed in the storage device. The interface card is, for example, a network interface card (also referred to as an intelligent network interface card) having a calculation capability, and a data processing unit DPU is a type of the intelligent network interface card.

This application further provides a processor. The processor includes: a power supply circuit, configured to supply power to a processing circuit; and the processing circuit, connected to the power supply circuit and configured to perform the data processing method provided in the foregoing embodiments and performed by the processor. The processor may be a CPU or a processor in the interface card. In addition to a type of an interface card, the DPU may specifically be a processor chip in the interface card. Therefore, in a possible implementation, the processor in the interface card is a data processing unit DPU.

An embodiment of this application provides a storage device. For example, FIG. 8 is a diagram of a hardware structure of a storage device according to an embodiment of this application. As shown in FIG. 8, the storage device 800 includes a memory 801, a processor 802, an interface card 803, and a bus 804. The memory 801, the processor 802, and the interface card 803 are in communication connection with each other through the bus 804. The bus 804 is a PCI bus or a PCIe bus. The processor 802 communicates with the memory 801 through a memory bus (for example, an address bus). There are one or more processors 802. The interface card 803 can communicate with a host.

The memory 801 may be a read-only memory (read-only memory, ROM), another type of static storage device that can store static information and instructions, a random access memory (random access memory, RAM) or another type of dynamic computing device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic computing device, or any other medium that can be configured to carry or store expected program code in a form of an instruction or a data structure and that can be accessed by a computer. However, this is not limited thereto. The processor 802 implements the data processing method in the following embodiments by reading program code stored in the memory 801, or the processor 802 implements the data processing method in embodiments of this application by using program code stored therein. When the processor 802 implements the data processing method in embodiments of this application by reading the program code stored in the memory 801, the memory 801 may store the program code for implementing the data processing method provided in embodiments of this application. The memory 801 may further store metadata and the like. This is not limited in this embodiment of this application.

The processor 802 is a central processing unit (central processing unit, CPU), an ASIC, or an integrated circuit configured to control program execution of the solutions of this application. The processor 802 may be a single-core (single-CPU) processor, or may be a multi-core (multi-CPU) processor. There may be one or more processors 802. The interface card 803 uses a transceiver module, for example, a transceiver, to implement communication between the computing device 800 and another device or a communication network. For example, data may be obtained by using the interface card 803.

The memory 801 and the processor 802 may be disposed separately, or may be integrated together.

The bus 804 may include a path for transferring information between components (for example, the memory 801, the processor 802, and the interface card 803) of the computing device 800.

In this application, the terms "first", "second", and the like are used for distinguishing between same or similar items with substantially the same effects and functions. It should be understood that there is no logical or timing dependency between "first", "second", and "n^{th}", and no limitation is imposed on the quantity and execution order. It should also be understood that although the following descriptions use the terms "first", "second", and the like to describe various elements, these elements should not be limited by the terms. These terms are merely used for distinguishing one element from another element. For example, without departing from the scope of the various examples, a first file may be referred to as a second file, and similarly, a second file may be referred to as a first file. Both the first file and the second file may be files, and in some cases, may be separate and different files.

The term "at least one" in this application means one or more, and the term "plurality of" in this application means two or more. For example, a plurality of files means two or more files.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by software, hardware, firmware, or any combination thereof. When software is used to implement embodiments, all or some of embodiments may be implemented in a form of program structure information. The program structure information includes one or more program instructions. When the program instructions are loaded and executed on a device, all or some of the procedures or functions according to embodiments of this application are generated.

A person of ordinary skill in the art may understand that all or some of the steps of embodiments may be implemented by hardware or a program instructing related hardware. The program may be stored in a computer-readable storage medium. The storage medium may include a read-only memory, a magnetic disk, an optical disc, or the like.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof. These modifications and replacements do not cause the essence of the corresponding technical solutions to depart from the scope of the technical solutions of embodiments of this application.

## Claims

1. A data processing method, wherein the method is performed by a processor in a storage device, the storage device is configured to provide a storage service for a host, and the storage device communicates with a detection device; and the method comprises:
receiving an infection detection request from the detection device, and obtaining a data feature of target data based on the infection detection request, wherein the infection detection request is for detecting whether the target data is infected by a virus, and the data feature is obtained by performing feature extraction on the target data; and
outputting the data feature of the target data to the detection device, wherein the data feature is used by the detection device to detect whether the data is infected by a virus.

2. The method according to claim 1, wherein the processor further performs, in a process of running a task related to storage of the target data, feature extraction on the target data to obtain the data feature.

3. The method according to claim 2, wherein that the processor further performs, in the process of running the task related to storage of the target data, feature extraction on the target data to obtain the data feature comprises:
when the processor is a storage device CPU, in a process in which the storage device CPU stores the target data, performing, by the storage device CPU, calculation on the target data to generate the data feature, wherein the storage device CPU is connected to a storage interface card; or
when the processor is a processing unit of the storage interface card, and the storage interface card further communicates with the host through a network, in a process in which the storage interface card receives the target data sent by the host, performing, by the processing unit of the storage interface card, calculation on the target data to generate the data feature.

4. The method according to claim 1, wherein before obtaining the data feature of the target data, the method further comprises:
receiving the data feature from the host; and
sending the data feature to a storage medium of the storage device for persistent storage.

5. The method according to claim 4, wherein before receiving the data feature from the host, a process in which the host determines the data feature comprises:
in a process in which a host CPU generates the target data, performing, by the host CPU, calculation on the target data to generate the data feature; or
in a process in which an interface card of the host sends the target data to the storage device, performing, by a processing unit of the interface card of the host, calculation on the target data to generate the data feature.

6. The method according to any one of claims 1 to 3, wherein the method further comprises:
in response to a write request from the host, before the target data is written into a target storage space of the storage device, performing feature extraction on the target data to obtain the data feature, wherein the write request carries the target data, and the target storage space is a persistent storage space provided by the storage device; and
storing the data feature as metadata of the data in the target storage space, wherein
obtaining the data feature of the target data based on the infection detection request specifically comprises:
obtaining the data feature from the metadata based on the infection detection request.

7. The method according to claim 6, wherein a storage space of the storage device is divided into a metadata storage space dedicated for metadata storage and a storage space not dedicated for metadata storage, and storing the data feature as the metadata of the data in the target storage space comprises:
in the metadata storage space that is in the storage device and that is dedicated for metadata storage, storing the data feature as the metadata of the data in the target storage space.

8. The method according to any one of claims 1 to 3, wherein obtaining the data feature of the target data based on the infection detection request comprises:
performing, based on the infection detection request, feature extraction on the target data stored in a target storage space indicated by the infection detection request, to obtain the data feature.

9. The method according to any one of claims 1 to 8, wherein the method further comprises:
in response to a feature policy configuration instruction, obtaining feature policy information for the storage device, wherein the feature policy information indicates a manner of performing feature extraction on data in the storage device.

10. The method according to any one of claims 1 to 9, wherein the data feature is specifically an information entropy of the target data or a digest of the target data, the information entropy indicates uncertainty of the target data, and the digest is a segment extracted from the data and is for identifying the data.

11. A processor, comprising:
a power supply circuit, configured to supply power to a processing circuit; and
the processing circuit, connected to the power supply circuit and configured to perform the method according to any one of claims 1 to 10.

12. A storage device, comprising an interface card and the processor according to claim 1, wherein the processor is the storage device CPU, the interface card is configured to communicate with a host, the storage device is configured to provide a storage service for the host, and the processor is configured to perform the method according to any one of claims 1 to 10.

13. An interface card, comprising an interface and the processor according to claim 1, wherein
the interface is configured to install the interface card in a storage device, and communicate with a central processing unit of the storage device after the interface card is installed in the storage device; and
the processor performs the method according to any one of claims 1 to 10 after the interface card is installed in the storage device.

14. A computer-readable storage medium, wherein the computer-readable storage medium is for storing program code, and the program code is for performing the data processing method according to any one of claims 1 to 10.

15. A computer program product, wherein when the computer program product runs on a computer, the computer is enabled to perform the data processing method according to any one of claims 1 to 10.
